# EUROPEAN PATENT APPLICATION

(11) **EP 2 070 439 A1**
(43) Date of publication of application: **17.06.2009**
(21) Application number: 08171238.2
(22) Date of filing: 10.12.2008
(51) Int. Cl.: A47B 13/02, F16B 7/04

(54) **Modular furniture item**

(30) Priority: 11.12.2007 IT TO20070152 U
(71) Applicant: Faram S.p.A., 31040 Giavera del Montello (TV) (IT)
(72) Inventor: Del Missier, Daniele, 31015, Conegliano (IT)
(74) Representative: Jorio, Paolo

(57) **Abstract**

A modular furniture item (1) having a lattice supporting structure (2), and a number of on-floor supporting legs (3) projecting from the supporting structure (2) to the floor; the supporting structure (2) having at least a first supporting rail (6, 8) with a substantially X-shaped cross section, and at least one anchoring clamp (7) which is fixed to the body of at least one of the on-floor supporting legs (3), and is designed to selectively enclose and clamp the first supporting rail (6, 8) so to clamp the on-floor supporting leg (3) rigidly and firmly, but in easily removable manner, to the body of the first supporting rail (6, 8).

## Description

The present invention relates to a modular furniture item.

More specifically, the present invention relates to a modular furniture item with a lattice supporting structure, to which the following description refers purely by way of example.

As is known, some modular furniture designs substantially comprise a lattice supporting structure with on-floor supporting legs; a supporting surface fixed horizontally to the supporting structure; and possibly one or more add-on modules, such as drawers, vertical partition panels, monitor brackets and the like, fixed in various ways to the supporting structure.

Of currently known lattice supporting structures, the most commercially successful comprises two opposite, parallel, longitudinal members with a square tubular cross section, positioned horizontally a given height off the floor; and a number of horizontal reinforcing cross members fixed at the ends to the longitudinal members by through anchoring bolts and brackets to connect the two longitudinal members rigidly to each other.

The through anchoring bolts and brackets are obviously also used to fix the supporting legs and any add-on modules to the two horizontal longitudinal members and/or reinforcing cross members.

Though cheap to produce, modular furniture of the above type has the major drawback of being fairly complicated to assemble, on account of the numerous through holes that must be formed manually at the final assembly stage in the longitudinal and/or reinforcing cross members. The through anchoring bolts and brackets, in fact, can only be positioned correctly at the final assembly stage, with all the drawbacks this entails.

Another drawback of modular furniture of the above type is its lack of flexibility : once the holes are formed in the supporting structure, the configuration of the furniture item can only be altered by making further holes in the supporting structure, thus impairing its overall look.

In most cases, in fact, the lattice supporting structure remains "exposed", so the old through holes are hard to conceal.

It is an object of the present invention to provide a modular furniture item with a lattice supporting structure, designed to eliminate the aforementioned drawbacks.

According to the present invention, there is provided a modular furniture item as claimed in Claim 1 and preferably, though not necessarily, in any one of the dependent Claims.

A non-limiting embodiment of the present invention will be described by way of example with reference to the accompanying drawings, in which:
Figure 1 shows a view in perspective of a modular furniture item in accordance with the teachings of the present invention;
Figures 2 and 3 show a detail of the Figure 1 furniture item in two different operating configurations;
Figure 4 shows an exploded view in perspective of a component part of the modular furniture item in Figures 1, 2 and 3.

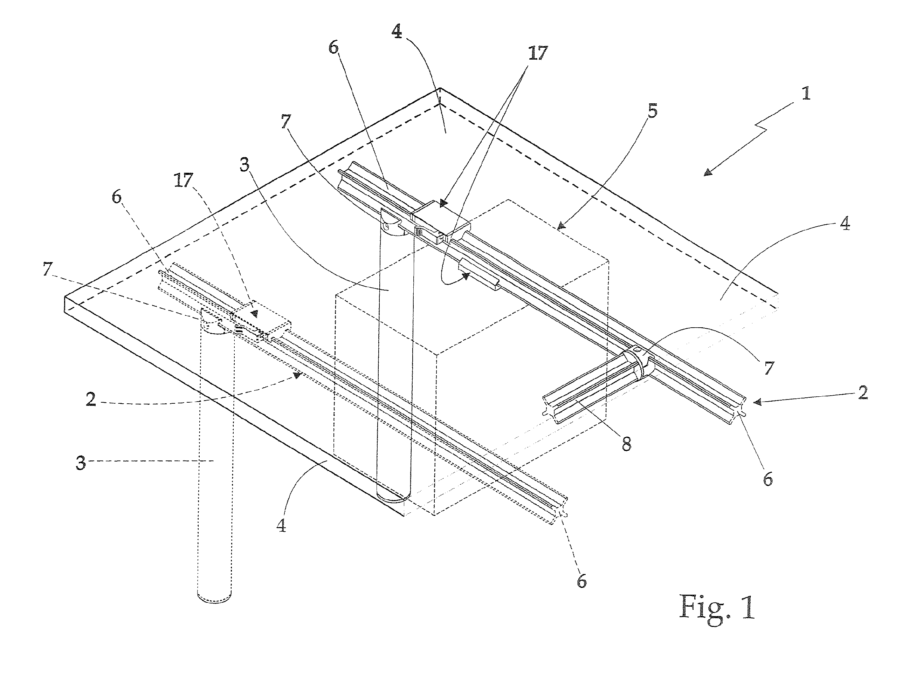

Number 1 in Figure 1 indicates as a whole a modular furniture item with a lattice supporting structure, particularly suitable for constructing work stations and similar.

Modular furniture item 1 comprises a horizontal lattice supporting structure 2; and a number of on-floor supporting legs 3 projecting downwards from supporting structure 2 to support supporting structure 2 a given height off the floor.

With reference to Figure 1, modular furniture item 1 comprises a supporting surface 4 fixed horizontally to supporting structure 2; and preferably, though not necessarily, one or more add-on modules 5, such as drawers, vertical partition panels, monitor brackets and the like, fixed firmly but in easily removable manner to supporting structure 2.

In the example shown, modular furniture item 1 comprises a known drawer cabinet 5 suspended directly from supporting structure 2, just below supporting surface 4.

With reference to Figures 1, 2 and 3, unlike known modular furniture, supporting structure 2 of modular furniture item 1 substantially comprises one or more horizontal, X-section longitudinal members 6 which are positioned horizontally, parallel and opposite each other, at a given height off the floor; and the on-floor supporting legs 3 are fixed to horizontal longitudinal members 6 by anchoring clamps 7, each of which is located on the top end of a respective leg 3, and is designed to selectively enclose and grip horizontal longitudinal member 6, to clamp leg 3 to the body of horizontal longitudinal member 6 rigidly and firmly, but in easily removable manner.

More specifically, in the example shown, supporting structure 2 of modular furniture item 1 substantially comprises two horizontal, X-section longitudinal members 6 positioned horizontally a given height off the floor; and one or more (one in the Figure 1 example) horizontal, X-section reinforcing cross members 8 fixed rigidly at the ends to both horizontal longitudinal members 6, preferably, though not necessarily, by the same anchoring clamps 7 used to fix legs 3 rigidly to horizontal longitudinal members 6.

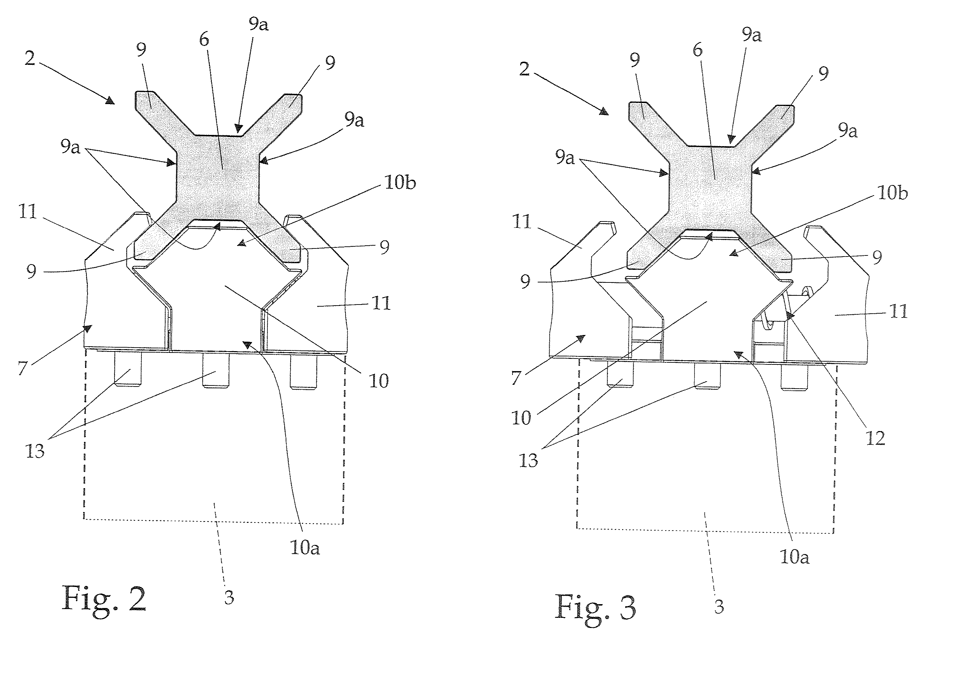

With reference to Figures 2, 3 and 4, horizontal longitudinal members 6 and cross members 8 are made of straight, substantially X-section metal rails, each of which has four longitudinal reinforcing flanges 9 spaced angularly about a central web to form, on the rail, two pairs of longitudinal grooves 9a, each with a cross section substantially in the shape of an isosceles triangle or isosceles trapezium.

Each anchoring clamp 7 comprises a central supporting body 10 shaped to engage any one of the four longitudinal grooves 9a on horizontal longitudinal member 6 or cross member 8 and at the same time rest on the inner lateral sides of the two adjacent longitudinal flanges 9 defining the longitudinal groove 9a of horizontal longitudinal member 6 or cross member 8; two lateral clamping jaws 11 fitted movably to opposite sides of central supporting body 10 so as to face the outer lateral sides of the two longitudinal flanges 9 defining the longitudinal groove 9a engaged by central supporting body 10; and a hand-operated jaw clamping device 12 for clamping the two lateral jaws 11 onto central supporting body 10 and onto the outer lateral sides of the two longitudinal flanges 9 defining the longitudinal groove 9a engaged by central supporting body 10, and so clamp central supporting body 10 rigidly and firmly to horizontal longitudinal member 6 or cross member 8.

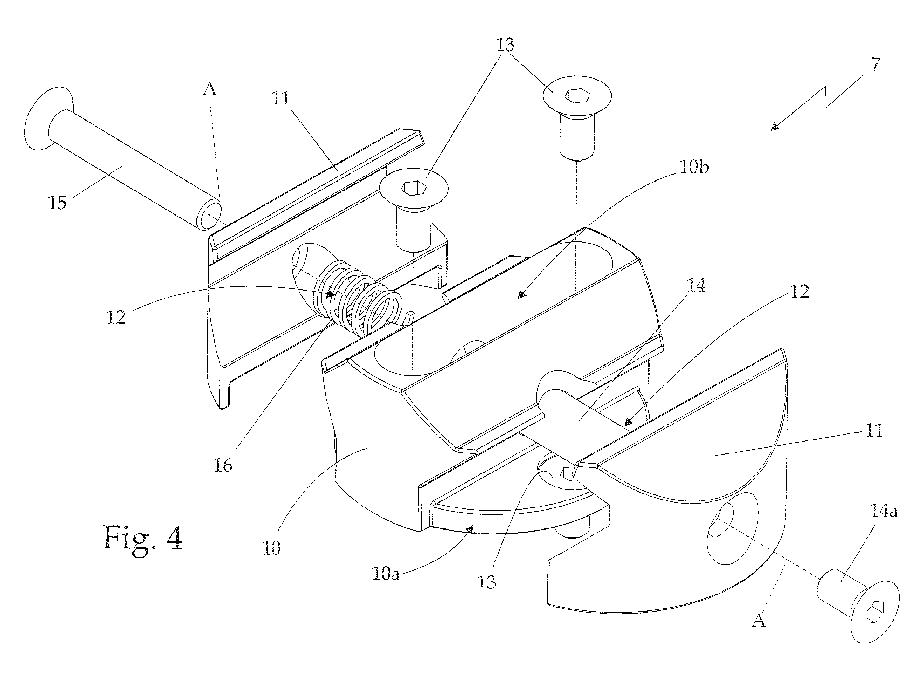

More specifically, and with particular reference to Figure 4, central supporting body 10 comprises, at a first end, a coupling plate 10a which fixes rigidly and firmly onto the top end of leg 3 or the axial end of horizontal cross member 8 by means of through screws 13 or similar fasteners; and, at a second end, a wedge-shaped head 10b shaped to engage a portion of any one of the four longitudinal grooves 9a on horizontal longitudinal member 6 or cross member 8, and at the same time rest on the inner lateral sides of the two longitudinal flanges 9 defining the longitudinal groove 9a of horizontal longitudinal member 6 or cross member 8.

In the example shown, coupling plate 10a is disk-shaped, and wedge-shaped head 10b projects from coupling plate 10a along a central plane locally perpendicular to the plane of coupling plate 10a.

With reference to Figures 3 and 4, jaw clamping device 12 comprises a tubular sleeve 14 which extends coaxially with a reference axis A locally perpendicular to the central plane of wedge-shaped head 10b, is fixed rigidly at one end to one of the two lateral jaws 11, and engages wedge-shaped head 10b in axially sliding manner just above coupling plate 10a; a tensioning screw 15 which extends coaxially with axis A, and the threaded shank of which fits through the other lateral jaw 11 of the clamp and is screwed partly at the end inside tubular sleeve 14; and a compression coil spring 16 fitted onto the threaded shank of tensioning screw 15, between lateral jaw 11 and tubular sleeve 14, so that a first end rests on the body of lateral jaw 11, on the opposite side to the head of screw 15, and a second end rests on the body of tubular sleeve 14 to keep the two lateral jaws 11 fully apart.

In the example shown, tubular sleeve 14 is fixed to one of the two lateral jaws 11 by a through screw 14a which extends coaxially with axis A through the body of lateral jaw 11, so compression coil spring 16 keeps one of the two lateral jaws 11 resting on the head of tensioning screw 15, and the other resting on the head of through screw 14a.

Modular furniture item 1 preferably, though not necessarily, also comprises a second number of anchoring clamps 17 by which to fix supporting surface 4 and/or any add-on modules 5 rigidly and firmly, but in easily removable manner, to horizontal longitudinal members 6 and/or cross members 8 forming supporting structure 2.

More specifically, like anchoring clamps 7, anchoring clamps 17 are also designed to selectively enclose and grip horizontal longitudinal member 6 or cross member 8, to clamp supporting surface 4, or any add-on modules 5 integral with it, rigidly and firmly, but in easily removable manner, to horizontal longitudinal members 6 and/or cross members 8 forming supporting structure 2.

With reference to Figure 1, anchoring clamps 17 each comprise a central supporting body shaped to engage any one of the four longitudinal grooves 9a on horizontal longitudinal member 6 or cross member 8 and at the same time rest on the inner lateral sides of the two adjacent longitudinal flanges 9 defining the longitudinal groove 9a of horizontal longitudinal member 6 or cross member 8; two lateral clamping jaws fitted movably to opposite sides of the central supporting body so as to face the outer lateral sides of the two longitudinal flanges 9 defining the longitudinal groove 9a engaged by the central supporting body; and a hand-operated jaw clamping device for clamping the two lateral jaws of anchoring clamp 17 onto the central supporting body of anchoring clamp 17 and onto the outer lateral sides of the two longitudinal flanges 9 defining the longitudinal groove 9a engaged by the central supporting body, and so clamp anchoring clamp 17 rigidly and firmly to horizontal longitudinal member 6 or cross member 8; and differ from anchoring clamps 7 as regards the design of the coupling plate of the central body.

More specifically, the central body coupling plate of each anchoring clamp 17 may be designed to support the underside face of supporting surface 4, or to connect anchoring clamp 17 directly to the add-on module 5.

Assembly of modular furniture item 1 can easily be deduced from the above description, with no further explanation required, except to point out that, by screwing tensioning screw 15 inside tubular sleeve 14, the two lateral jaws 11 can be moved closer to central supporting body 10 to clamp the two longitudinal flanges 9 defining the longitudinal groove 9a engaged by central supporting body 10, and so clamp anchoring clamp 7 rigidly to the body of horizontal longitudinal member 6 or cross member 8.

The advantages of modular furniture item 1 are obvious : using X-section supporting rails 6, 8 together with anchoring clamps 7, the furniture item can be assembled and disassembled extremely quickly, with no need for holes or any other work on supporting structure 2.

Moreover, the shape of the cross section of supporting rails 6, 8 enables anchoring clamps 7 to be positioned and, if necessary, slid freely along any one of the four lateral faces of the rail, thus greatly improving the versatility of supporting structure 2 as compared with known structures.

The same also applies to anchoring clamps 17, which provide for fixing and removing supporting surface 4 and/or any add-on modules 5 quickly to and from supporting structure 2 (i.e. horizontal longitudinal members 6 and/or cross members 8) with no need for holes or any other work on supporting structure 2.

Clearly, changes may be made to modular furniture item 1 as described and illustrated herein without, however, departing from the scope of the present invention.

## Claims

1. A modular furniture item (1) comprising a lattice supporting structure (2), and a number of on-floor supporting legs (3) projecting from the supporting structure (2) to the floor; the modular furniture item (1) being **characterized in that** said supporting structure (2) comprises at least a first supporting rail (6, 8) with a substantially X-shaped cross section; and at least one anchoring clamp (7) which is fixed to the body of at least one of said on-floor supporting legs (3), and is designed to selectively enclose and clamp said first supporting rail (6, 8) so to clamp the on-floor supporting leg (3) rigidly and firmly, but in easily removable manner, to the body of said first supporting rail (6, 8).

2. A modular furniture item as claimed in Claim 1, **characterized in that** said supporting structure (2) also comprises a second supporting rail (8) which is fixed rigidly to said first supporting rail (6); said anchoring clamp (7) also being fixed to the end of said second supporting rail (8), and selectively clamping said second supporting rail (8) rigidly and firmly, but in easily removable manner, to the body of said first supporting rail (6).

3. A modular furniture item as claimed in either of the foregoing Claims, **characterized in that** said first (6) and said second (8) supporting rail are both positioned substantially horizontally.

4. A modular furniture item as claimed in any one of the foregoing Claims, **characterized in that** said first supporting rail (6, 8) comprises four angularly-spaced longitudinal flanges (9) forming, on said first supporting rail (6, 8), four longitudinal grooves (9a) with a cross section substantially in the form of an isosceles triangle or isosceles trapezium; and **in that** said anchoring clamp (7) comprises a central supporting body (10) shaped to engage any one of the four longitudinal grooves (9a) on said first supporting rail (6, 8) and at the same time rest on the inner lateral sides of the two adjacent longitudinal flanges (9) defining the longitudinal groove (9a) of said supporting rail; two lateral clamping jaws (11) fitted movably to opposite sides of the central supporting body (10) so as to face the outer lateral sides of the two longitudinal flanges (9) defining the longitudinal groove (9a) engaged by said central supporting body (10); and a jaw clamping device (12) for clamping the two lateral jaws (11) onto said central supporting body (10) and onto the outer lateral sides of the two longitudinal flanges (9) defining the longitudinal groove (9a) engaged by the central supporting body (10), and so clamp the central supporting body (10) rigidly and firmly to said first supporting rail (6, 8).

5. A modular furniture item as claimed in Claim 4, **characterized in that** the central supporting body (10) of the anchoring clamp (7) comprises, at a first end, a coupling plate (10a) which fixes rigidly onto the end of said on-floor supporting leg (3) or of said second supporting rail (8); and, at a second end, a wedge-shaped head (10b) shaped to engage a portion of any one of the four longitudinal grooves (9a) on said first supporting rail (6, 8) and at the same time rest on the inner lateral sides of the two longitudinal flanges (9) defining said longitudinal groove (9a) of the first supporting rail (6, 8).

6. A modular furniture item as claimed in any one of the foregoing Claims, **characterized by** comprising a supporting surface (4) fixed horizontally to said supporting structure (2).

7. A modular furniture item as claimed in any one of the foregoing Claims, **characterized by** also comprising at least one add-on module (5) fixed firmly but in easily removable manner to said supporting structure (2).

8. A modular furniture item as claimed in Claim 6 and/or 7, **characterized by** also comprising a number of auxiliary anchoring clamps (17) for selectively fixing said supporting surface (4) and/or said add-on module (5) rigidly and firmly, but in easily removable manner, to said first supporting rail (6, 8).
